# EUROPEAN PATENT APPLICATION

(11) **EP 1 816 661 A1**
(43) Date of publication of application: **08.08.2007**
(21) Application number: 05809469.9
(22) Date of filing: 21.11.2005
(51) Int. Cl.: H01G 9/058

(54) **ELECTRIC DOUBLE LAYER CAPACITOR**

(30) Priority: 19.11.2004 JP 2004335858; 22.09.2005 JP 2005276198
(71) Applicant: Ube Industries, Ltd., Ube-shi, Yamaguchi-ken 755-8633 (JP)
(72) Inventor: YOSHIO, Masaki, Saga-shi, Saga 840-0027 (JP); YOSHITAKE, Hideya, UBE INDUSTRIES, LTD., Tokyo, 105-8449 (JP)
(74) Representative: Luderschmidt, Wolfgang
(86) International application number: PCT/JP2005/021376
(87) International publication number: WO 2006/054747

(57) **Abstract**

There is disclosed an electric double layer capacitor ,wherein an active material for the positive electrode is a graphite or a graphitic material, and an active material for the negative electrode is a graphite or graphitic material different from the active material for the positive electrode, and wherein the capacitor is capable of charging/discharging at a voltage of 2.5 V or higher. The capacitor provides an electric storage system with a high voltage operation, a high capacity and a high energy while retaining the feature of high-speed charge/discharge.

## Description

### Technical Field

The present invention relates to an electric double layer capacitor with a high voltage operation and a large capacity which is highly reliable in a charge/discharge cycle, as well as an electronic device and a power system therewith.

### Background Art

Lithium ion secondary batteries, electric double layer capacitors and the like are known as electric storage systems using a non-aqueous electrolytic solution.

In a lithium ion secondary battery, a lithium-containing transition metal oxide is used for a positive electrode, a graphite carbon compound into which lithium can be intercalated is used for a negative electrode, and a non-aqueous electrolytic solution containing a lithium salt is used for an electrolytic solution.

A lithium ion secondary battery generally uses a lithium-containing transition metal oxide as a positive electrode, so that the lithium ion secondary battery allows for charge/discharge with a high voltage operation and is thus appreciated as a high capacity battery, while positive/negative electrode active materials themselves insertion and release lithium ions, leading to early deterioration in a charge/discharge cycle.

A well-known electric double layer capacitor has a positive electrode and a negative electrode which are polarizable electrodes containing charcoal as a main component, allowing rapid charge/discharge and ensuring high reliability in a charge/discharge cycle although a capacity is low.

However, there has been demanded an electrochemical system capable of operating at a higher voltage becuase an electric energy of an electric double layer capacitor that utilizes an electric double layer capacity formed in an interface between a polarizable electrode and an electrolytic solution and hence forms a stable power source is expressed by 1/2CV².

There has been recently suggested a system for improving a capacity in an electric storage system in an electric double layer capacitor, in which a positive electrode includes PFPT (poly-p-fluorophenylthiophene) and a negative electrode includes charcoal. There have been also suggested a system where a positive electrode includes charcoal and a negative electrode includes lithium titanate, and a system where a positive electrode includes charcoal and a negative electrode includes a graphite carbon. For these proposed electric storage systems, there have been, however, reported possibility of deterioration during initial charge/discharge cycles, reduction in a capacity due to rapid charge/discharge and structural deterioration due to repetitive insertion and release of lithium ions to a graphite carbon. For example, Japanese Laid-open Patent Publication No. 1998-199767 (Patent Document 1) has proposed a special carbon material as an electrode material in an electric double layer capacitor and a manufacturing process therefor.

Japanese Laid-open Patent Publication No. 2002-151364 (Patent Document 2) has proposed an electric double layer capacitor comprising a graphite carbon material having a FWHM (full width at half maximum) of 0.5 to 5.0 in X-ray diffraction of (002) peak as a main component of both electrodes, a positive electrode and a negative electrode, which is, as illustrated in examples therein, characterized in that an electric double layer capacitor prepared is used after applying a high voltage of 3.8 V for 20 min to 5 hours instead of steam activation.

Japanese Laid-open Patent Publication No. 2004-134658 (Patent Document 3) has proposed an electrochemical element where a carbon material for a positive electrode includes a boron-containing graphite prepared by heating a carbon material containing boron or a boron compound and a carbon material for a negative electrode includes charcoal, and a high-capacity electric double layer capacitor based on an anion intercalation reaction in a positive electrode. Japanese Laid-open Patent Publication No. 2004-134658 has described that in a graphite material without boron, anion insertion causes crystal collapse and a capacity of reversible insertion and release is reduced as the charge/discharge cycle proceeds, whereas inclusion of boron improves stability of a graphite crystal structure (paragraphs 0024 to 0026). As a comparative example, there has been disclosed an electric double layer capacitor using a graphite (synthetic graphite: see paragraph 0064) as a positive electrode, charcoal as a negative electrode and an aqueous electrolytic solution, but it has a low initial discharge capacity and poor cycle properties.

Any of the proposed methods for an electric double layer capacitor is unsatisfactory for use in terms of, for example, an initial capacity, and there are further needs for improvement.

Japanese Laid-open Patent Publication No. 2005-294780 (Patent Document 4) which was unpublished at the filing date of the priority application of the present invention and later published has described the use of a graphite as a positive active material and a graphite or charcoal as a negative active material, but has not disclosed the use of different graphites for a positive active material and a negative active material.
Patent document 1: Japanese Laid-open Patent Publication No. 1998-199767
Patent document 2: Japanese Laid-open Patent Publication No. 2002-151364
Patent document 3: Japanese Laid-open Patent Publication No. 2004-134658
Patent document 4: Japanese Laid-open Patent Publication No. 2005-294780

### Disclosure of the Invention

### Subject to be solved by the Invention

An objective of the present invention is to replace conventional batteries such as lead batteries, lithium ion batteries and nickel hydride batteries and hence the present invention provides an electric double layer capacitor with a large capacity and higher reliability in a charge/discharge cycle.

### Means to solve the Subject

The present invention relates to the following items.
1. An electric double layer capacitor comprising a positive electrode, a negative electrode, a separator and a non-aqueous electrolytic solution,
   wherein an active material for the positive electrode is a graphite or a graphitic material, and
   an active material for the negative electrode is a graphite or graphitic material different from the active material for the positive electrode, and
   wherein the capacitor is capable of charging/discharging at a voltage of 2.5 V or higher.
2. The electric double layer capacitor as claimed in The above item 1, wherein the graphite or the graphitic material for the positive electrode has a smaller specific surface area than a specific surface area of the graphite or graphitic material for the negative electrode.
3. The electric double layer capacitor as claimed in the above item 1, wherein the graphite or the graphitic material for the positive electrode has a specific surface area of less than 10 m²/g.
4. The electric double layer capacitor as claimed in the above item 1, wherein the graphite or the graphitic material for the positive electrode has a smaller d(002) interlayer distance than a d(002) interlayer distance of the graphite or the graphitic material for the negative electrode.
5. The electric double layer capacitor as claimed in the above item 1, wherein charge/discharge in the capacitor is attained by anion adsorption and desorption at the positive electrode and cation adsorption and desorption at the negative electrode.
6. An electric double layer capacitor comprising a positive electrode, a negative electrode, a separator and a non-aqueous electrolytic solution,
   wherein an active material for the positive electrode is a graphite or a graphitic material capable of adsorbing anions and having a specific surface area of less than 10 m²/g and
   an active material for the negative electrode is charcoal, and
   wherein the capacitor is capable of charging/discharging at a voltage of 2.5 V or higher.
7. The electric double layer capacitor as claimed in any of the above items 1 to 6, wherein the positive electrode has a smaller volume than a volume of the negative electrode.
8. The electric double layer capacitor as claimed in any of the above items 1 to 7, wherein the non-aqueous electrolytic solution contains onium salt(s).
9. An electronic device comprising the electric double layer capacitor as claimed in any of the above items 1 to 8.
10. A motive power system comprising the electric double layer capacitor as claimed in any of the above items 1 to 8.

### Effect of the Invention

An electric double layer capacitor of the present invention is capable of charging/discharging at a voltage of 2.5 V or higher. The present invention can provide an electric double layer capacitor having a higher operating voltage, a higher capacity and a higher energy than an electric double layer capacitor using charcoal for both positive/negative electrodes, while retaining the feature of high-speed charge/discharge properties.

In an embodiment of the present invention, the graphite or the graphitic material used as an active material for the positive electrode adsorbs anions, so that reliability in a charge/discharge cycle is improved in comparison with an electric double layer capacitor where lithium is intercalated in a negative electrode.

### Brief Description of the Drawings

FIG. 1 is a graph illustrating cycle properties of the electric double layer capacitors in Examples.
FIG. 2 shows the results of X-ray diffraction measurements for a graphite in a positive electrode while increasing a charging voltage.

### Best Mode for Carrying Out the Invention

There will be described embodiments of the present invention in detail.

An electric double layer capacitor of the present invention has materials such as a positive electrode active material, a negative electrode active material, a binder, a collector, a separator and an electrolytic solution. It may have a form such as winding, stack and meander (i.e. zigzag) types. As a system for taking an electric capacity, any of the conventional techniques such as ECaSS^{™} can be suitably applied.

The term, a "graphite" as used herein refers to a material having a basic structural unit (crystallite) of regular lamination of a two-dimensional lattice structure where carbon atoms form a hexagonal network plane based on a SP2 hybridized orbital and exhibiting strong anisotropy. In the present invention, a graphite or graphitic material is a material where graphite properties are adequately developed to be generally appreciated as a "graphite", has a small d(002) interlayer distance by X-ray diffraction of generally 0.3390 nm or less, preferably 0.3370 nm or less, most preferably within the range of 0.3354 nm to 0.3362 nm as used in Examples described later. The graphite or the graphitic material used in the present invention has a small FWHM (full width at half maximum) of a X-ray diffraction peak {a width in a peak half-value (°)/peak value}, particularly preferably the range of 0.170° to 0.263° as used in Examples. It is preferable in the present invention that the graphite is generally free from boron as the graphite or the graphitic material used in Examples.

The graphite or the graphitic material for the positive electrode may be any of natural and artificial graphites, preferably an artificial graphite made from petroleum coke for obtaining a higher capacity. In another embodiment of the present invention, a natural graphite is preferable.

The graphite or the graphitic material used has an average particle size of 0.5 to 500 µm, preferably 1 to 50 µm, more preferably 4 to 10 µm. An electric double layer capacitor is required to have a high storage energy per a unit volume. Therefore, a material for the positive electrode is preferably a graphite or graphitic material with an increased packing density or a spheronized graphite or graphitic material. Furthermore, a graphite or graphitic material surface-processed by, for example, carbon CVD is effective for improvement of cycle properties and a high voltage operation.

In one aspect of the present invention, the active material for the negative electrode is a graphite or graphitic material different from the positive electrode active material. It is not particularly limited as long as it is different from the material of the active material for the positive electrode, and thus may be a spheronized graphite or graphitic material or a graphite or graphitic material surface-processed by, for example, carbon CVD, as described for the positive electrode.

It is preferable in the present invention that the active material for the positive electrode has a smaller specific surface area than that of the active material for the negative electrode because a high capacity can be obtained. In one embodiment of the present invention, the graphite or the graphitic material for the positive electrode has a specific surface area of less than 10 m²/g, and in a particular embodiment, within the range of 1 to 9 m²/g (see Examples). In another embodiment of the present invention, the graphite or graphitic material has a smaller d(002) interlayer distance than a d(002) interlayer distance of the graphite or graphitic material for the negative electrode (see Examples). A volume of the positive electrode is preferably smaller than that of the negative electrode because it allows for operation at a higher voltage.

In one aspect of the present invention, the active material for the negative electrode is charcoal. Charcoal has an irregular lamination of a two-dimensional lattice structure of hexagonal network plane (disordered layer structure). For example, it may be selected from those used in known carbon electrodes. For example, activation-processed materials of resins or petroleum pitch, in addition to coconut husk, chaff and wood flour, can be used. The activation herein may be conducted by a known method using steam or a chemical agent such as alkali activation.

As a binder, but not limited to, PVDF (polyvinylidene fluoride), PTFE (polytetrafluoro ethylene) or a rubber may be used.

Examples of a rubber binder component include aliphatic-based rubbers such as EPT, EPDM, butyl rubbers, propylene rubbers and natural rubbers, and aromatic-containing rubbers such as styrene-butadiene rubbers. The structures of these rubbers may have a hetero-containing moiety such as nitrile, acryl and carbonyl, or silicon, and may have straight and branched chains without limitations. These may be used alone or in combination of two or more, to be an excellent binder.

The collector is generally an aluminum foil, but may be also made of stainless steel, nickel or titanium. Mixtures of these or those containing other elements can be used for enhancing conductivity and ensuring strength. The surface of the base material may be made uneven by, for example, etching, or a conductive metal or carbon (for example, acetylene black) may be embedded in or added to a base material. The collector may be mesh structure in addition to foil type.

A separator is commonly made of cellulose, but in an electric double layer capacitor having an electromotive voltage of about 3 V, the outermost surface of the separator in contact with a positive or negative electrode is preferably made of a compound having a breakdown voltage of the electromotive force of water or more. For example, a microporous membrane of which separator material per se is polyethylene, polypropylene, polyimide and the like, or a multilayer membrane consisting of a lamination of these meet the requirement. Alternatively, it may be cellulose whose surface is coated with PVDF, a silicon resin or a rubber resin. Of course, one or more sheets of the separator may placed between the positive and the negative electrodes, or two or more types of separators may be appropriately used.

Examples of an organic solvent which may be used as an electrolytic solution include cyclic carbonates such as propylene carbonate; cyclic esters such as γ-butyrolactone; heterocyclic compounds such as N-methylpyrrolidone; nitriles such as acetonitrile; and other polar solvents such as sulfolane and sulfoxides.

Specific compounds are as follows; ethylene carbonate, propylene carbonate, butylene carbonate, γ-butyrolactone, δ-valerolactone, N-methylpyrrolidone, N,N-dimethylimidazolidinone, N-methyloxazolidinone, acetonitrile, methoxyacetonitrile, 3-methoxypropionitrile, glutaronitrile, adiponitrile, sulfolane, 3-methylsulfolane, dimethylsulfoxide, N,N-dimethylformamide and trimethylphosphate. These solvents may be used alone or in combination of two or more.

Preferable examples of electrolyte contained in the non-aqueous electrolytic solution include onium salts such as ammonium salts, pyridinium salts, pyrrolidinium salts, piperidinium salts, imidazolium salts and phosphonium salts, and preferable examples of anions of these salts include those derived from fluoro compounds such as fluoroborate ion, hexafluorophosphorate ion and trifluoromethanesulfonate ion.

Specific examples are as follows; tetramethylammonium fluoroborate, ethyltrimethylammonium fluoroborate, diethyldimethylammonium fluoroborate, triethylmethylammonium fluoroborate, tetraethylammonium fluoroborate, tetrapropylammonium fluoroborate, tributylmethylammonium fluoroborate, tetrabutylammonium fluoroborate, tetrahexylammonium fluoroborate, propyltrimethylammonium fluoroborate, butyltrimethylammonium fluoroborate, heptyltrimethylammonium fluoroborate, (4-pentenyl)trimethylammonium fluoroborate, tetradecyltrimethylammonium fluoroborate, hexadecyltrimethylammonium fluoroborate, heptadecyltrimethylammonium fluoroborate, octadecyltrimethylammonium fluoroborate, 1,1'-difluoro-2,2'-bipyridinium bistetrafluoroborate, N,N-dimethylpyrrolidinium fluoroborate, N-ethyl-N-methylpyrrolidinium fluoroborate, N,N-diethylpyrrolidinium fluoroborate, N,N-dimethylpiperidinium fluoroborate, N-ethyl-N-methylpiperidinium fluoroborate, N,N-diethylpiperidinium fluoroborate, 1,1-tetramethylenepyrrolidinium fluoroborate, 1,1-pentamethylenepiperidinium fluoroborate, N-ethyl-N-methylmorpholinium fluoroborate, ammonium fluoroborate, tetramethylphosphonium fluoroborate, tetraethylphosphonium fluoroborate, tetrapropylphosphonium fluoroborate, tetrabutylphosphonium fluoroborate, tetramethylammonium hexafluorophosphate, ethyltrimethylammonium hexafluorophosphate, tetraethylammonium hexafluorophosphate, vinyltrimethylammonium hexafluorophosphate, hexadecyltrimethylammonium hexafluorophosphate, dodecyltrimethylammonium hexafluorophosphate, tetraethylammonium perchlorate, tetraethylammonium hexafluoroarsenate, tetraethylammonium hexafluoroantimonate, tetraethylammonium trifluoromethanesulfonate, tetraethylammonium nonafluorobutanesulfonate, tetraethylammonium bis(trifluoromethanesulfonyl)imide, tetraethylammonium triethylmethylborate, tetraethylammonium tetraethylborate, tetraethylammonium tetrabutylborate, tetraethylammonium tetraphenylborate, 1-ethyl-3-methylimidazolium hexafluorophosphate, 1-ethyl-3-methylimidazolium fluoroborate, 1-ethyl-3-methylimidazolium trifluoromethanesulfonate, 1-butyl-3-methylimidazolium hexafluorophosphate, 1-butyl-3-methylimidazolium fluoroborate, 1-butyl-3-methylimidazolium trifluoromethanesulfonate, 1-hexyl-3-methylimidazolium hexafluorophosphate, 1-hexyl-3-methylimidazolium fluoroborate, 1-hexyl-3-methylimidazolium trifluoromethanesulfonate, 1-octyl-3-methylimidazolium hexafluorophosphate, 1-octyl-3-methylimidazolium fluoroborate, 1-butyl-2,3-dimethylimidazolium fluoroborate, 1-butyl-2,3-dimethylimidazollum trifluoromethanesulfonate, 1-hexyl-2,3-dimethylimidazolium fluoroborate, 1-hexyl-2,3-dimethylimidazolium trifluoromethanesulfonate, 1-butylpyridinium hexafluorophosphate, 1-butylpyridinium fluoroborate, 1-butylpyridinium trifluoromethanesulfonate, 1-hexylpyridinium hexafluorophosphate, 1-hexylpyridinium fluoroborate, 1-hexylpyridinium trifluoromethanesulfonate, 1-butyl-4-methylpyridinium hexafluorophosphate, 1-butyl-4-methylpyridinium fluoroborate, 1-fluoropyridiniumpyridine heptafluorodiborate and 1-fluoropyridinium fluoroborate. These electrolytes may be used alone or in combination of two or more.

An electric double layer capacitor of the present invention exhibits a high capacity and a capability in being charged/discharged at a voltage of 2 V or higher, particularly 2.5 V or higher, so that it can store large amount of energy and can be used in a variety of applications. For example, an electric double layer capacitor of the present invention can be applied to an electronic device such as a back-up power supply for a personal computer and a power supply for a cellular phone, a mobile device or a digital camera.

Furthermore, an electric double layer capacitor of the present invention can be applied to a variety of motive power systems such as an electric vehicle.

### EXAMPLES

There will be described Examples of the present invention. These examples are intended to illustrate the invention and are not to be construed to limit the present invention.

### Example 1

Timrex^{®} KS4 (TIMCAL Ltd.) (specific surface area: 26 m²/g) was selected as a positive electrode active material, and 80 parts by weight thereof was dried in vacuo for 24 hours and mixed with 8 parts by weight of acetylene black and 8 parts by weight of PVDF in NMP (N-methylpyrrolidone) to prepare an ink. The ink was applied on one side of an aluminum foil with a thickness of 15 µm and then dried and pressed to provide an electrode with a thickness of 100 µm.

PW15M (Kuraray Co., Ltd.) (specific surface area: 1050 m²/g) was selected as a negative electrode active material, and 80 parts by weight thereof was dried in vacuo for 24 hours and then mixed with 8 parts by weight of acetylene black and 8 parts by weight of PVDF in NMP to prepare an ink. It was applied on one side of an aluminum foil with a thickness of 15 µm, dried and pressed to provide an electrode with a thickness of 140 µm.

Each of the positive electrode and the negative electrode thus obtained was cut into a piece of 2.4 cm × 1.5 cm, with which a polyethylene unwoven fabric with a thickness of 30 µm as a separator and an aluminum laminate film as an outer covering were combined to prepare an electric double layer capacitor. An electrolytic solution was 1M-[(C₂H₅)₃(CH₃)N]· BF₄/PC(propylene carbonate).

To determine capacity of this electric double layer capacitors, charge at a constant current of 1 mA was conducted until an element voltage reached 3.5 V. Then, discharge at a constant current of 1 mA was conducted until an element voltage was confirmed to have reached 0 V. The capacity of the positive electrode in the discharge process was taken as capacity of electric double layer capacitor. Table 1 shows the conditions of preparing an electric double layer capacitor and the results of capacitance measurement. Table 2 shows the properties of the graphite or the graphitic material used and charcoal together with those used in the other examples.

### Example 2

An electric double layer capacitor was prepared as described in Example 1, except that Timrex^{®} KS6 (TIMCAL Ltd.) (specific surface area: 20 m²/g) was used as a positive electrode active material, and its capacitance was determined. Table 1 shows the conditions of preparing the electric double layer capacitor and the results of capacitance measurement.

### Example 3

A procedure was conducted as described in Example 2, except that Timrex^{®} KS15 (TIMCAL Ltd.) (specific surface area: 12 m²/g) was used as a positive electrode active material. Table 1 shows the conditions of preparing the electric double layer capacitor and the results of capacitance measurement.

### Example 4

A procedure was conducted as described in Example 2, except that Timrex^{®} KS44 (TIMCAL Ltd.) (specific surface area: 9 m²/g) was used as a positive electrode active material. Table 1 shows the conditions of preparing the electric double layer capacitor and the results of capacitance measurement.

### Example 5

A procedure was conducted as described in Example 2, except that as a negative electrode active material, 160 parts by weight of PW15M (Kuraray Co., Ltd.) was dried in vacuo for 24 hours and then mixed with 16 parts by weight of acetylene black and 16 parts by weight of PVDF in NMP to prepare an ink. It was applied on one side of an aluminum foil with a thickness of 15 µm, dried and pressed to provide an electrode with a thickness of 200 µm. Table 1 shows the conditions of preparing the electric double layer capacitor and the results of capacitance measurement.

### Example 6

A procedure was conducted as described in Example 2, except that as a negative electrode active material, 240 parts by weight of PW15M (Kuraray Co., Ltd.) was dried in vacuo for 24 hours and then mixed with 24 parts by weight of acetylene black and 24 parts by weight of PVDF in NMP to prepare an ink. It was applied on one side of an aluminum foil with a thickness of 15 µm, dried and pressed to provide an electrode with a thickness of 310 µm. Table 1 shows the conditions of preparing the electric double layer capacitor and the results of capacitance measurement.

### Example 7

A procedure was conducted as described in Example 2, except that as a negative electrode active material, 320 parts by weight of PW15M (Kuraray Co., Ltd.) was dried in vacuo for 24 hours and then mixed with 32 parts by weight of acetylene black and 32 parts by weight of PVDF in NMP to prepare an ink. It was applied on one side of an aluminum foil with a thickness of 15 µm, dried and pressed to provide an electrode with a thickness of 400 µm. Table 1 shows the conditions of preparing the electric double layer capacitor and the results of capacitance measurement.

### Example 8

A procedure was conducted as described in Example 2, except that as a negative electrode active material, 480 parts by weight of PW15M (Kuraray Co., Ltd.) was dried in vacuo for 24 hours and then mixed with 48 parts by weight of acetylene black and 48 parts by weight of PVDF in NMP to prepare an ink. It was applied on one side of an aluminum foil with a thickness of 15 µm, dried and pressed to provide an electrode with a thickness of 600 µm. Table 1 shows the conditions of preparing the electric double layer capacitor and the results of capacitance measurement.

### Example 9

A procedure was conducted as described in Example 2, except that as a negative electrode active material, 560 parts by weight of PW15M (Kuraray Co., Ltd.) was dried in vacuo for 24 hours and then mixed with 56 parts by weight of acetylene black and 56 parts by weight of PVDF in NMP to prepare an ink. It was applied on one side of an aluminum foil with a thickness of 15 µm, dried and pressed to provide an electrode with a thickness of 700 µm. Table 1 shows the conditions of preparing the electric double layer capacitor and the results of capacitance measurement.

### Example 10

A procedure was conducted as described in Example 2, except that as a negative electrode active material, 320 parts by weight of MAGC (Hitachi Chemical Co., Ltd.) (specific surface area: 1 m²/g) was dried in vacuo for 24 hours and then mixed with 32 parts by weight of acetylene black and 32 parts by weight of PVDF in NMP to prepare an ink. It was applied on one side of an aluminum foil with a thickness of 15 µm, dried and pressed to provide an electrode with a, thickness of 250 µm. Table 1 shows the conditions of preparing the electric double layer capacitor and the results of capacitance measurement.

### Example 11

A procedure was conducted as described in Example 2, except that as a negative electrode active material, 320 parts by weight of MAGD (Hitachi Chemical Co., Ltd.) (specific surface area: 4 m²/g) was dried in vacuo for 24 hours and then mixed with 32 parts by weight of acetylene black and 32 parts by weight of PVDF in NMP to prepare an ink. It was applied on one side of an aluminum foil with a thickness of 15 µm, dried and pressed to provide an electrode with a thickness of 250 µm. Table 1 shows the conditions of preparing the electric double layer capacitor and the results of capacitance measurement.

### Example 12

A procedure was conducted as described in Example 2, except that as a negative electrode active material, 320 parts by weight of MCMB6-28(Osaka Gas Co., Ltd.) (specific surface area :6 m²/g) was dried in vacuo for 24 hours and then mixed with 32 parts by weight of acetylene black and 32 parts by weight of PVDF in NMP to prepare an ink. It was applied on one side of an aluminum foil with a thickness of 15 µm, dried and pressed to provide an electrode with a thickness of 250 µm. Table 1 shows the conditions of preparing the electric double layer capacitor and the results of capacitance measurement.

### Example 13

A procedure was conducted as described in Example 7, except that 1M-N,N-diethylpyrrolidinium fluoroborate/PC was used as an electrolytic solution. Table 1 shows the conditions of preparing the electric double layer capacitor and the results of capacitance measurement.

### Example 14

A procedure was conducted as described in Example 7, except that (0.9M-[(C₂H₅)₃(CH₃)N] ·BF₄+0.1M·[(C₂H₅)₃(CH₃)N]·PF₆)/PC was used as an electrolytic solution. Table 1 shows the conditions of preparing the electric double layer capacitor and the results of capacitance measurement.

### Example 15

A procedure was conducted as described in Example 2, except that as a negative electrode active material, 320 parts by weight of Ishizu charcoal (a reagent from Ishizu Ltd.) (specific surface area :880 m²/g) was dried in vacuo for 24 hours and then mixed with 32 parts by weight of acetylene black and 32 parts by weight of PVDF in NMP to prepare an ink. It was applied on one side of an aluminum foil with a thickness of 15 µm, dried and pressed to provide an electrode with a thickness of 400 µm. Table 1 shows the conditions of preparing the electric double layer capacitor and the results of capacitance measurement.

### Example 16

A procedure was conducted as described in Example 7, except that MAGC (Hitachi Chemical Co., Ltd.) was used as a positive electrode active material. Table 1 shows the conditions of preparing the electric double layer capacitor and the results of capacitance measurement.

### Example 17

A procedure was conducted as described in Example 7, except that MAGD (Hitachi Chemical Co., Ltd.) was used as a positive electrode active material. Table 1 shows the conditions of preparing the electric double layer capacitor and the results of capacitance measurement.

### Example 18

A procedure was conducted as described in Example 7, except that NG12 (KANSAI COKE AND CHEMICALS CO., LTD.) (specific surface area: 6 m²/g) was used as a positive electrode active material. Table 1 shows the conditions of preparing the electric double layer capacitor and the results of capacitance measurement.

### Example 19

A procedure was conducted as described in Example 7, except that MCMB6-28(Osaka Gas Co., Ltd.) was used as a positive electrode active material. Table 1 shows the conditions of preparing the electric double layer capacitor and the results of capacitance measurement.

### Example 20

A procedure was conducted as described in Example 7, except that SGB 10L/99.9 (Graphit Kropfmuhl AG) (specific surface area: 2 m²/g) was used as a positive electrode active material. Table 1 shows the conditions of preparing the electric double layer capacitor and the results of capacitance measurement.

### Example 21

Timrex^{®} KS6 (TIMCAL Ltd.) (specific surface area: 20 m²/g) was selected as a positive electrode active material, and 100 parts by weight thereof was dried in vacuo for 24 hours and mixed with 10 parts by weight of acetylene black, 2 parts by weight of a dispersant CMC (trade name "1270", Daicel Chemical Industries, Ltd.) and 5 parts by weight of a binder (trade name "AD-630", ZEON Corporation) in distilled water to prepare an ink. The ink was applied on one side of an etched aluminum foil with a thickness of 40 µm, dried and pressed to provide an electrode with a thickness of 80 µm.

SP5030 (Nippon Graphite Industries, Ltd.) (specific surface area: 13 m²/g) was selected as a negative electrode active material, and 100 parts by weight thereof was dried in vacuo for 24 hours and mixed with 10 parts by weight of acetylene black, 2 parts by weight of a dispersant CMC (trade name "1270", Daicel Chemical Industries, Ltd.) and 5 parts by weight of a binder (trade name "AD-630", ZEON Corporation) in distilled water to prepare an ink. The ink was applied on one side of an etched aluminum foil with a thickness of 40 µm, dried and pressed to provide an electrode with a thickness of 60 µm.

Each of the positive electrode and the negative electrode was diced into a circle with a diameter of 16 ø mm, and they are contacted each other via a glass-wool separator to prepare a coin type (diameter: 20 mm, thickness: 3.2 mm) electric double layer capacitor. An electrolytic solution was 1.5M-[(C₂H₅)₃(CH₃)N] PF₆/PC (propylene carbonate). Table 1 shows the conditions of preparing the electric double layer capacitor and the results of capacitance measurement.

### Example 22

A procedure was conducted as described in Example 21, except that SP5030 (Nippon Graphite Industries, Ltd.) (specific surface area: 13 m²/g) was used as a negative electrode active material and an electrode with a thickness of 100 µm was prepared. Table 1 shows the conditions of preparing the electric double layer capacitor and the results of capacitance measurement.

### Example 23

A procedure was conducted as described in Example 21, except that SP5030 (Nippon Graphite Industries, Ltd.) (specific surface area: 13 m²/g) was used as a negative electrode active material and an electrode with a thickness of 240 µm was prepared. Table 1 shows the conditions of preparing the electric double layer capacitor and the results of capacitance measurement.

### Example 24

A procedure was conducted as described in Example 21, except that SP80 (Nippon Graphite Industries, Ltd.) (specific surface area: 80 m²/g) was used as a negative electrode active material and an electrode with a thickness of 90 µm was prepared. Table 1 shows the conditions of preparing the electric double layer capacitor and the results of capacitance measurement.

### Example 25

A procedure was conducted as described in Example 21, except that SP80 (Nippon Graphite Industries, Ltd.) (specific surface area: 80 m²/g) was used as a negative electrode active material and an electrode with a thickness of 190 µm was prepared. Table 1 shows the conditions of preparing the electric double layer capacitor and the results of capacitance measurement.

### Example 26

A procedure was conducted as described in Example 21, except that SP200 (Nippon Graphite Industries, Ltd.) (specific surface area: 205 m²/g) was used as a negative electrode active material and an electrode with a thickness of 40 µm was prepared. Table 1 shows the conditions of preparing the electric double layer capacitor and the results of capacitance measurement.

### Example 27

A procedure was conducted as described in Example 21, except that SP200 (Nippon Graphite Industries, Ltd.) (specific surface area: 205 m²/g) was used as a negative electrode active material and an electrode with a thickness of 90 µm was prepared. Table 1 shows the conditions of preparing the electric double layer capacitor and the results of capacitance measurement.

### Example 28

A procedure was conducted as described in Example 21, except that SP200 (Nippon Graphite Industries, Ltd.) (specific surface area: 205 m²/g) was used as a negative electrode active material and an electrode with a thickness of 200 µm was prepared. Table 1 shows the conditions of preparing the electric double layer capacitor and the results of capacitance measurement.

### Example 29

A procedure was conducted as described in Example 21, except that SP270 (Nippon Graphite Industries, Ltd.) (specific surface area: 243 m²/g) was used as a negative electrode active material and an electrode with a thickness of 30 µm was prepared. Table 1 shows the conditions of preparing the electric double layer capacitor and the results of capacitance measurement.

### Example 30

A procedure was conducted as described in Example 21, except that SP270 (Nippon Graphite Industries, Ltd.) (specific surface area: 243 m²/g) was used as a negative electrode active material and an electrode with a thickness of 70 µm was prepared. Table 1 shows the conditions of preparing the electric double layer capacitor and the results of capacitance measurement.

### Example 31

A procedure was conducted as described in Example 21, except that SP270 (Nippon Graphite Industries, Ltd.) (specific surface area: 243 m²/g) was used as a negative electrode active material and an electrode with a thickness of 150 µm was prepared. Table 1 shows the conditions of preparing the electric double layer capacitor and the results of capacitance measurement.

### Example 32

A procedure was conducted as described in Example 21, except that SP270 (Nippon Graphite Industries, Ltd.) (specific surface area: 243 m²/g) was used as a negative electrode active material and an electrode with a thickness of 240 µm was prepared. Table 1 shows the conditions of preparing the electric double layer capacitor and the results of capacitance measurement.

### Example 33

A procedure was conducted as described in Example 21, except that SP440 (Nippon Graphite Industries, Ltd.) (specific surface area: 440 m²/g) was used as a negative electrode active material and an electrode with a thickness of 60 µm was prepared. Table 1 shows the conditions of preparing the electric double layer capacitor and the results of capacitance measurement.

### Example 34

A procedure was conducted as described in Example 21, except that SP440 (Nippon Graphite Industries, Ltd.) (specific surface area: 440 m²/g) was used as a negative electrode active material and an electrode with a thickness of 80 µm was prepared. Table 1 shows the conditions of preparing the electric double layer capacitor and the results of capacitance measurement.

### Example 35

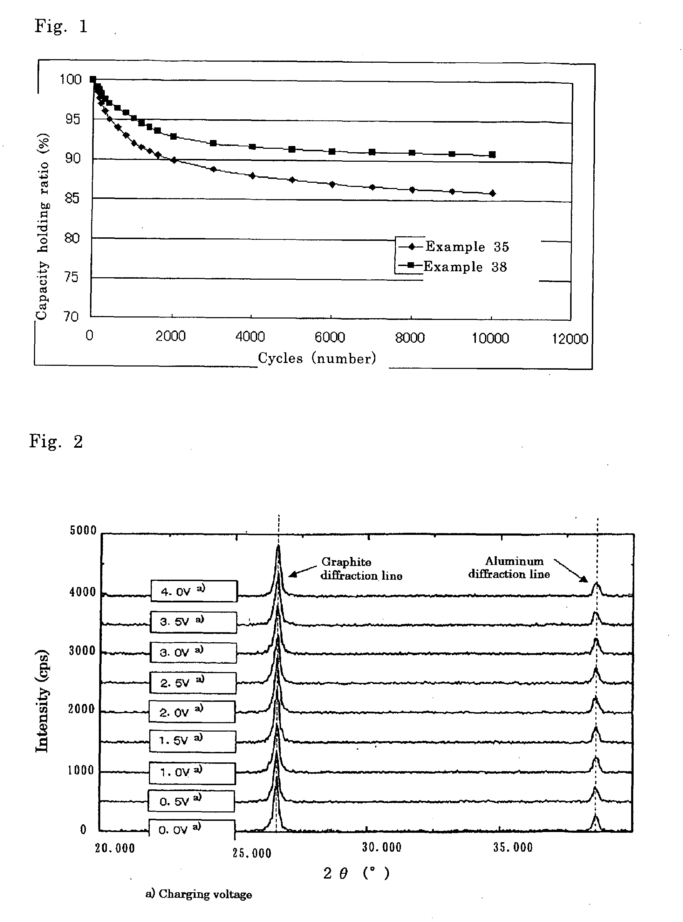

A procedure was conducted as described in Example 21, except that SP440 (Nippon Graphite Industries, Ltd.) (specific surface area: 440 m²/g) was used as a negative electrode active material and an electrode with a thickness of 280 µm was prepared. Table 1 shows the conditions of preparing the electric double layer capacitor and the results of capacitance measurement. The cycle properties of this capacitor are shown in FIG. 1. From the results, it is considered that the collapse of graphite crystal or the like in the graphite or the graphitic material used in the positive and the negative electrodes did not take place.

### Example 36

A procedure was conducted as described in Example 21, except that Timrex^{®} KS6 (TIMCAL Ltd.) (specific surface area: 20 m²/g) was selected as a negative electrode active material, whose surface was treated as described in Example 4 in Japanese Patent Application 1999-279320, and then, 100 parts by weight thereof was dried in vacuo for 24 hours and mixed with 10 parts by weight of acetylene black, 2 parts by weight of a dispersant CMC (trade name "1270", Daicel Chemical Industries, Ltd.) and 5 parts by weight of a binder (trade name "AD-630", ZEON Corporation) in distilled water to prepare an ink, and the ink was applied on one side of an etched aluminum foil with a thickness of 40 µm, dried and pressed to provide an electrode with a thickness of 80 µm.

Table 1 shows the conditions of preparing the electric double layer capacitor and the results of capacitance measurement.

### Example 37

Timrex^{®} KS6 (TIMCAL Ltd.) (specific surface area: 20 m²/g) was selected as a positive electrode active material, whose surface was treated as described in Example 4 in Japanese Patent Application 1999-279320. Then, 100 parts by weight thereof was dried in vacuo for 24 hours and mixed with 10 parts by weight of acetylene black, 2 parts by weight of a dispersant CMC (trade name "1270", Daicel Chemical Industries, Ltd.) and 5 parts by weight of a binder (trade name "AD-630", ZEON Corporation) in distilled water to prepare an ink. The ink was applied on one side of an etched aluminum foil with a thickness of 40 µm, dried and pressed to provide an electrode with a thickness of 80 µm.

A procedure was conducted as described in Example 21, except that SP270 (Nippon Graphite Industries Ltd.) (specific surface area: 243 m²/g) was used as a negative electrode active material and an electrode with a thickness of 150 µm was prepared. Table 1 shows the conditions of preparing the electric double layer capacitor and the results of capacitance measurement.

### Example 38

A procedure was conducted as described in Example 37, except that SP440 (Nippon Graphite Industries Ltd.) (specific surface area: 440 m²/g) was used as a negative electrode active material and an electrode with a thickness of 280 µm was prepared. Table 1 shows the conditions of preparing the electric double layer capacitor and the results of capacitance measurement. The cycle properties of this capacitor are shown in FIG. 1. From the results, it is considered that the collapse of graphite crystal or the like in the graphite or the graphitic material used in the positive and the negative electrodes did not take place.

### Example 39

A procedure was conducted as described in Example 37, except that SP5030 (Nippon Graphite Industries Ltd.) (specific surface area: 13 m²/g) was used as a negative electrode active material and an electrode with a thickness of 60 µm was prepared. Table 1 shows the conditions of preparing the electric double layer capacitor and the results of capacitance measurement.

### Comparative Example 1

PW15M (Kuraray Co., Ltd.) was selected as a positive/negative electrode active material, and 80 parts by weight of the material was dried in vacuo for 24 hours and mixed with 8 parts by weight of acetylene black and 8 parts by weight of PVDF in NMP to prepare an ink. The ink was applied on one side of an aluminum foil with a thickness of 15 µm and then dried and pressed to provide an electrode with a thickness of 140 µm. The electrode was cut into a piece of 2.4 cm × 1.5 cm, with which a polyethylene unwoven fabric with a thickness of 30 µm as a separator and an aluminum laminate film as an outer covering were combined to prepare an electric double layer capacitor. An electrolytic solution was 1M-[(C₂H₅)₃(CH₃)N]· BF₄/PC.

### Determination of a capacitance

To determine capacity of this electric double layer capacitors (measured at a temperature of 25 °C), charge at a constant current of 1 mA was conducted until an element voltage reached 2.5 V. Then discharge at a constant current of 1 mA was conducted until an element voltage was confirmed to have reached 0 V. The capacity of the positive electrode in the discharge process was taken as capacity of electric double layer capacitors. The results are shown in Table 1 together with the conditions of preparing the charging system.

### Reference Experiment

As illustrated in FIG. 2, a cell having the aluminum laminate film in Example 1 as an outer covering was placed on a XRD sample stage such that the positive electrode side of the cell was to be irradiated with X-ray. The cell was charged at 1 mA and when a charge voltage reached a given value, the sample was swept with X-ray in the range of 2θ:20° to 40° over 2 min. In this measurement, X-ray (CuKα ray) was allowed to transmit the aluminum laminate outer covering and the aluminum collector. There is illustrated X-ray diffraction of the graphite in the positive electrode side in this measurement. The figure indicates that even when a charging voltage was increased by charging the capacitor, there are no changes in a diffraction angle in a X-ray diffraction peak for the graphite in the positive electrode. It can be, therefore, concluded that during charging, intercalation did not occur in the graphite used for the positive electrode.

**Table 1**

| | Positive electrode active material | Negative electrode active material | Positive electrode: Negative electrode (by weight) | Charge-stopping voltage (V) | Discharge-stopping voltage (V) | Capacity (mAh/g) |
|---|---|---|---|---|---|---|
| Comp Exam. 1 | PW15M | PW 15M | 1:1 | 2.5 | 0 | 15 |
| Exam. 1 | KS4 | PW15M | 1:1 | 3.5 | 0 | 28 |
| Exam. 2 | KS6 | PW15M | 1:1 | 3.5 | 0 | 35 |
| Exam. 3 | KS15 | PW 15M | 1:1 | 3.5 | 0 | 25 |
| Exam. 4 | KS44 | PW15M | 1:1 | 3.5 | 0 | 23 |
| Exam. 5 | KS6 | PW15M | 1:2 | 3.5 | 0 | 52 |
| Exam. 6 | KS6 | PW15M | 1:3 | 3.5 | 0 | 57 |
| Exam. 7 | KS6 | PW15M | 1:4 | 3.5 | 0 | 88 |
| Exam. 8 | KS6 | PW15M | 1:6 | 3.5 | 0 | 130 |
| Exam. 9 | KS6 | PW15M | 1:7 | 3.5 | 0 | 147 |
| Exam.10 | KS6 | MAGC | 1:4 | 3.5 | 0 | 8 |
| Exam. 11 | KS6 | MAGD | 1:4 | 3.5 | 0 | 4 |
| Exam. 12 | KS6 | MCMB | 1:4 | 3.5 | 0 | 5 |
| Exam. 13 | KS6 | PW15M | 1:4 | 3.5 | 0 | 101 |
| Exam. 14 | KS6 | PW15M | 1:4 | 3.5 | 0 | 91 |
| Exam. 15 | KS6 | Ishizu Charcoal | 1:4 | 3.5 | 0 | 76 |
| Exam. 16 | MAGC | PW15M | 1:4 | 3.5 | 0 | 46 |
| Exam. 17 | MAGD | PW15M | 1:4 | 3.5 | 0 | 49 |
| Exam. 15 | NG12 | PW15M | 1:4 | 3.5 | 0 | 53 |
| Exam. 19 | MCMB6-28 | PW15M | 1:4 | 3.5 | 0 | 50 |
| Exam. 20 | SGB | PW15M | 1:4 | 3.5 | 0 | 60 |
| Exam. 21 | KS6 | SP5030 | 1:0.5 | 3.5 | 0 | 4 |
| Exam. 22 | KS6 | SP5030 | 1:0.9 | 3.5 | 0 | 4 |
| Exam. 23 | KS6 | SP5030 | 1:2.1 | 3.5 | 0 | 3 |
| Exam. 24 | KS6 | SP80 | 1:1.1 | 3.5 | 0 | 5 |
| Exam. 25 | KS6 | SP80 | 1:2.4 | 3.5 | 0 | 12 |
| Exam. 26 | KS6 | SP200 | 1:0.5 | 3.5 | 0 | 3 |
| Exam. 27 | KS6 | SP200 | 1:1.0 | 3.5 | 0 | 6 |
| Exam. 28 | KS6 | SP200 | 1:2.2 | 3.5 | 0 | 24 |
| Exam. 29 | KS6 | SP270 | 1:0.4 | 3.5 | 0 | 4 |
| Exam. 30 | KS6 | SP270 | 1:1.0 | 3.5 | 0 | 12 |
| Exam.31 | KS6 | SP270 | 1:2.0 | 3.5 | 0 | 24 |
| Exam. 32 | KS6 | SP270 | 1:3.3 | 3.5 | 0 | 38 |
| Exam. 33 | KS6 | SP440 | 1:0.5 | 3.5 | 0 | 8 |
| Exam. 34 | KS6 | SP440 | 1:0.7 | 3.5 | 0 | 13 |
| Exam. 35 | KS6 | SP440 | 1:2.5 | 3.5 | 0 | 42 |
| Exam. 36 | KS6 | KS6(treated) | 1:1.0 | 3.5 | 0 | 3 |
| Exam. 37 | KS6(treated) | SP270 | 1:2.0 | 3.5 | 0 | 23 |
| Exam. 38 | KS6(treated) | SP440 | 1:2.5 | 3.5 | 0 | 43 |
| Exam. 39 | KS6(treated) | SP5030 | 1:0.5 | 3.5 | 0 | 4 |

**Table 2**

| | Interlayer distance Å | FWHM (full width at half maximum) ° | Specific surface area m²/g | Average particle size µm |
|---|---|---|---|---|
| PW 15M | 4.022 | 9.35 | 1050 | 6.2 |
| KS4 | 3.355 | 0.263 | 26 | 2.4 |
| KS6 | 3.355 | 0.254 | 20 | 3.4 |
| KS15 | 3.355 | 0.232 | 12 | 8.0 |
| KS44 | 3.354 | 0.204 | 9 | 19 |
| MAGC | 3.356 | 0.202 | 1 | 21 |
| MAGD | 3.356 | 0.201 | 4 | 24 |
| NG12 | 3.355 | 0.170 | 6 | 12 |
| MCMB6-28 | 3.362 | 0.257 | 6 | 5.8 |
| SGB | 3.358 | 0.181 | 2 | 25 |
| KS6 treated | 3.355 | 0.260 | 4 | 4.5 |
| Ishizu Charcoal | 3.987 | 8.52 | 880 | 25 |
| SP5030 | 3.358 | 0.198 | 13 | 5.4 |
| SP80 | 3.358 | 0.205 | 80 | 24 |
| SP200 | 3.359 | 0.217 | 205 | 19 |
| SP270 | 3.360 | 0.222 | 243 | 7.0 |
| SP440 | 3.360 | 0.258 | 440 | 19 |

### Industrial Applicability

The present invention can provide an electric double layer capacitor which has a large capacity and exhibits a reliable charge/discharge cycle.

## Claims

1. An electric double layer capacitor comprising a positive electrode, a negative electrode, a separator and a non-aqueous electrolytic solution,
wherein an active material for the positive electrode is a graphite or a graphitic material, and
an active material for the negative electrode is a graphite or graphitic material different from the active material for the positive electrode, and
wherein the capacitor is capable of charging/discharging at a voltage of 2.5 V or higher.

2. The electric double layer capacitor as claimed in Claim 1, wherein the graphite or the graphitic material for the positive electrode has a smaller specific surface area than a specific surface area of the graphite or graphitic material for the negative electrode.

3. The electric double layer capacitor as claimed in Claim 1, wherein the graphite or the graphitic material for the positive electrode has a specific surface area of less than 10 m²/g.

4. The electric double layer capacitor as claimed in Claim 1, wherein the graphite or the graphitic material for the positive electrode has a smaller d(002) interlayer distance than a d(002) interlayer distance of the graphite or the graphitic material for the negative electrode.

5. The electric double layer capacitor as claimed in Claim 1, wherein charge/discharge in the capacitor is attained by anion adsorption and desorption at the positive electrode and cation adsorption and desorption at the negative electrode.

6. An electric double layer capacitor comprising a positive electrode, a negative electrode, a separator and a non-aqueous electrolytic solution,
wherein an active material for the positive electrode is a graphite or a graphitic material capable of adsorbing anions and having a specific surface area of less than 10 m²/g and
an active material for the negative electrode is charcoal, and
wherein the capacitor is capable of charging/discharging at a voltage of 2.5 V or higher.

7. The electric double layer capacitor as claimed in any of Claims 1 to 6, wherein the positive electrode has a smaller volume than a volume of the negative electrode.

8. The electric double layer capacitor as claimed in any of Claims 1 to 7, wherein the non-aqueous electrolytic solution contains onium salt(s).

9. An electronic device comprising the electric double layer capacitor as claimed in any of Claims 1 to 8.

10. A motive power system comprising the electric double layer capacitor as claimed in any of Claims 1 to 8.
